(19) Europäisches Patentamt
European Patent Office
Office européen des brevets

(11) Veröffentlichungsnummer: **0 013 759**
**B1**

(12) **EUROPÄISCHE PATENTSCHRIFT**

(45) Veröffentlichungstag der Patentschrift: **25.11.81**

(51) Int. Cl.³: **C 07 C 145/04, A 01 N 47/10**

(21) Anmeldenummer: **79105387.9**

(22) Anmeldetag: **27.12.79**

(54) **N-sulfenylierte Diurethane, ein Verfahren zu ihrer Herstellung sowie Herbizide, die diese Diurethane als Wirkstoffe enthalten.**

(30) Priorität: **17.01.79 DE 2901626**

(43) Veröffentlichungstag der Anmeldung: **06.08.80 Patentblatt 80/16**

(45) Bekanntmachung des Hinweises auf die Patenterteilung: **25.11.81 Patentblatt 81/47**

(84) Benannte Vertragsstaaten: **AT BE CH DE FR GB IT LU NL SE**

(56) Entgegenhaltungen: **DE-A- 1 922 929**

(73) Patentinhaber: **BASF Aktiengesellschaft, Carl-Bosch-Strasse 38, D-6700 Ludwigshafen (DE)**

(72) Erfinder: **Schirmer, Ulrich, Dr., Berghalde 79, D-6900 Heidelberg 1 (DE)**
Erfinder: **Thym, Sabine, Dr., Hasenhain 20, D-6900 Heidelberg-Dossenheim (DE)**
Erfinder: **Wuerzer, Bruno, Dr. Dipl.-Ing., Wilhelm-Busch-Strasse 55, D-6703 Limburgerhof (DE)**

**EP 0 013 759 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

N-sulfenylierte Diurethane, ein Verfahren zu ihrer Herstellung sowie Herbizide, die diese Diurethane als Wirkstoffe enthalten

Die vorliegende Erfindung betrifft neue Diurethane, ein Verfahren zu ihrer Herstellung und Herbizide, die diese Verbindungen als Wirkstoffe enthalten.

Es ist bekannt, daß Methyl-N-(3-(N'-(3'-methylphenylcarbamoyloxy)-phenyl)-carbamat (DE-AS 15 67 151) als Herbizid zur Bekämpfung von breitblättrigen Unkräutern in Zuckerrüben bei Nachauflaufanwendung Verwendung findet. Trotz allgemein guter Verträglichkeit für diese Kultur können dabei Selektivitätsschwierigkeiten auftreten, wenn die Behandlung während des Auflaufens und beim Entfalten der Keimblätter erfolgt.

Die Alkylierung der aciden NH-Gruppen dieses Wirkstoffs führt zu Carbamaten mit verhältnismäßig schwachen herbiziden Eigenschaften (DE-OS 15 67 163). So bedingt beispielsweise die Methylierung beider Stickstoffe eine erhebliche Verringerung der Photosynthesehemmaktivität (Z. Naturforsch. 23 b, 342–348 (1968)).

Es wurde nun gefunden, daß neue N-sulfenylierte Diurethane der Formel I

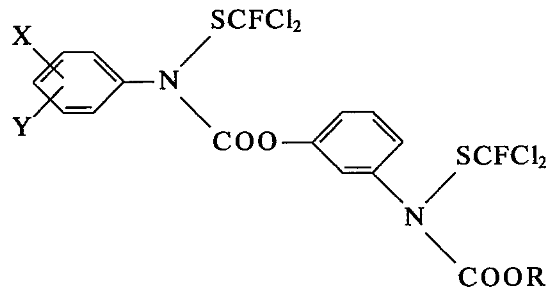

(I)

in der

R gegebenenfalls durch Halogen oder Alkoxy substituiertes Alkyl, Alkenyl und Alkinyl mit jeweils bis zu 5 Kohlenstoffatomen und

X und Y gleich oder verschieden sind und Wasserstoff, Halogen, Alkyl, Halogenalkyl, Alkoxy oder Alkylthio mit jeweils bis zu 4 Kohlenstoffatomen, Nitro oder Cyano bedeuten,

eine gute herbizide Wirkung bei ausgezeichneter Verträglichkeit für Kulturpflanzen besitzen.

R in Formel I steht für unverzweigtes oder verzweigtes Alkyl, Alkenyl oder Alkinyl mit bis zu 5 Kohlenstoffatomen, beispielsweise Methyl, Äthyl, die isomeren Propyl-, Butyl-, Pentylreste, Allyl, 1-Methylpropen-2-yl, Propargyl, 1-Methyl-propin-2-yl.

Diese Reste können durch Halogen, beispielsweise Chlor, oder durch Alkoxygruppen mit bis zu 2 Kohlenstoffatomen substituiert sein. Beispiele hierfür sind 2-Chloräthyl, 2-Methoxyäthyl, 2-Chlorallyl, 4-Chlor-butin-2-yl, 2-Äthoxy-n-propyl.

X und Y in Formel I können gleich oder verschieden sein und Wasserstoff, Halogen, beispielsweise Fluor, Chlor, Brom, Jod, unverzweigtes oder verzweigtes Alkyl mit bis zu 4 Kohlenstoffatomen, beispielsweise Methyl, Äthyl, Isopropyl, tert.-Butyl, unverzweigtes oder verzweigtes Halogenalkyl mit bis zu 4 Kohlenstoffatomen, beispielsweise Trifluormethyl, 1-Chlorisopropyl, unverzweigtes oder verzweigtes Alkoxy mit bis zu 4 Kohlenstoffatomen, beispielsweise Methoxy, Äthoxy, tert.-Butoxy, unverzweigtes oder verzweigtes Alkylthio mit bis zu 4 Kohlenstoffatomen, beispielsweise Methylthio, Äthylthio, sowie Nitro oder Cyano bedeuten.

Bevorzugte Diurethane der Formel I sind solche, bei denen R Methyl oder Äthyl, X Wasserstoff, Chlor, Fluor, Methyl oder Äthyl und Y Wasserstoff bedeuten.

Die N-sulfenylierten Diurethane der Formel I können durch Umsetzung von Diurethanen der Formel II

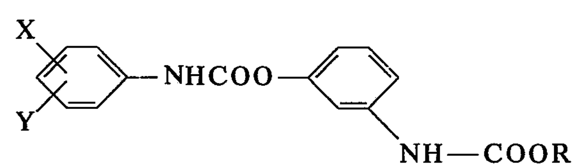

(II)

in der R, X und Y die für die Formel I angegebenen Bedeutungen haben, mit Dichlorfluorsulfenylchlorid in Gegenwart eines säurebindenden Mittels in einem Lösungs- oder Verdünnungsmittel erhalten werden.

Die Umsetzung läßt sich durch die folgende Reaktionsgleichung wiedergeben:

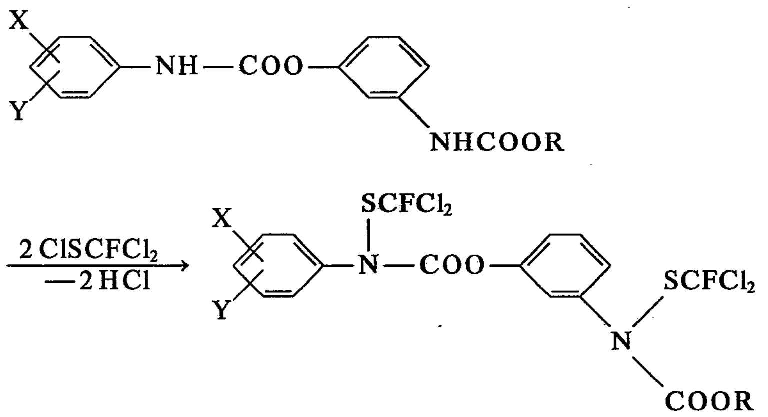


Als säurebindende Mittel kommen organische Basen, wie tertiäre Amine, beispielsweise Trialkylamine, wie Triäthylamin, Dialkylcyclohexylamine, Chinolin oder Pyridin sowie anorganische Basen, wie Hydroxide, Hydrogencarbonate oder Carbonate von Alkali- oder Erdalkalimetallen, beispielsweise Kaliumcarbonat, Natriumhydrogencarbonat, Calciumcarbonat, Kaliumhydroxid, in Betracht. Das säurebindende Mittel wird in mindestens molaren Mengen, bezogen auf die Verbindung der Formel II bzw. bezogen auf Dichlorfluorsulfenylchlorid, eingesetzt.

Die Umsetzung wird in Gegenwart eines Lösungs- oder Verdünnungsmittels durchgeführt. Geeignet sind, außer Wasser, organische Solventien, wie gegebenenfalls chlorierte, aliphatische und aromatische Kohlenwasserstoffe, Ketone, Äther, Ester oder Nitrile, beispielsweise Methylenchlorid, Toluol, Chlorbenzol, Cyclohexan, Petroläther, Aceton, Tetrahydrofuran, Dioxan, Essigester, Acetonitril, sowie Dimethylsulfoxid, Sulfolan, Hexamethylphosphorsäuretriamid und Dimethylformamid.

Die Umsetzung wird bei Reaktionstemperaturen im Bereich zwischen —20 und +110°C, drucklos oder unter Druck, durchgeführt. Dabei setzt man das Dichlorfluorsulfenylchlorid vorzugsweise im Überschuß, bezogen auf das Diurethan der Formel II, ein.

Die als Ausgangsstoffe verwendeten Diurethane der Formel II sind bekannt und können nach bekannten Verfahren hergestellt werden (DE-AS 15 68 138, 15 67 151, 15 67 163, 26 38 897). Die Herstellung von Dichlorfluorsulfenylchlorid ist in J. Gen. Chem. USSR 1959, S. 3362 beschrieben.

Das folgende Beispiel erläutert die Herstellung der erfindungsgemäßen Verbindungen.

Beispiel 1

143 g Methyl-N-(3-N'-phenylcarbamoyloxy)-phenyl)-carbamat werden zusammen mit 250 g Dichlorfluorsulfenylchlorid in 750 ml Toluol vorgelegt. Man tropft bei Raumtemperatur eine Mischung aus 177 g Triäthylamin und 500 ml Toluol zu und läßt 3 Stunden lang nachrühren. Das so erhaltene Reaktionsgemisch wird zunächst mit 400 ml Eiswasser, dann dreimal mit 250 ml eiskalter 20%iger Salzsäure und wieder mit Wasser ausgeschüttelt. Nach dem Trocknen über Natriumsulfat wird eingeengt, mit 100 ml Diäthyläther und 400 ml Petroläther versetzt und nach kurzem Stehen abgesaugt.

Man erhält 233 g kristallines Produkt vom Fp. 88 bis 89°C.

Elementaranalyse:

| | | | | | | |
|---|---|---|---|---|---|---|
| ber.: | C 37,0 | H 2,2 | N 5,1 | S 11,6 | Cl 25,7 | F 6,9 |
| gef.: | C 37,1 | H 2,3 | N 5,2 | S 11,6 | Cl 25,7 | F 6,6. |

Die Verbindung hat folgende Strukturformel:

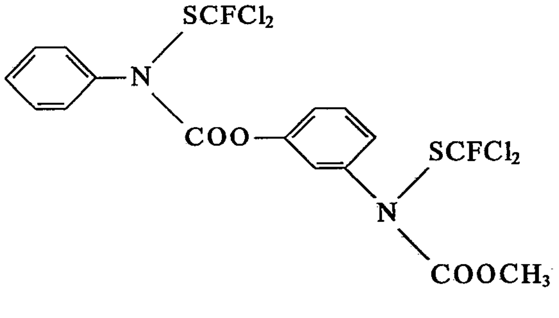

Analog lassen sich beispielsweise folgende Verbindungen herstellen:

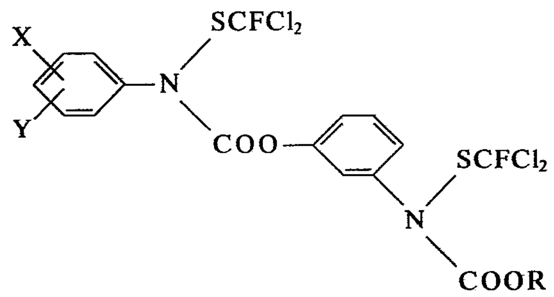

| Nr. | R | X | Y | Fp. (°C) |
|---|---|---|---|---|
| 2 | $C_2H_5$ | H | H | 101–103 |
| 3 | $CH_3$ | 3-Cl | 4-$CH_3$ | |
| 4 | $CH_2—C{\equiv}CH$ | 3-$NO_2$ | H | |
| 5 | $CH_2CH_2Cl$ | 3-$CF_3$ | H | |
| 6 | $CH_3$ | 3-$CH_3$ | H | 72–76 |
| 7 | $CH_2CH_2OCH_3$ | 3-$CH_3O$ | H | |
| 8 | $CH_3$ | 3-$CH_3S$ | H | |
| 9 | $CH_2CH{=}CH_2$ | 3-$C_2H_5O$ | H | |
| 10 | $C_2H_5$ | 3-F | 4-F | |
| 11 | $C_2H_5$ | 3-Cl | 4-F | 74–76 |
| 12 | $CH_3$ | 4-F | H | |
| 13 | $CH(CH_3)—C{\equiv}CH$ | 4-Br | H | |
| 14 | $CH_3$ | 3-CN | H | |
| 15 | $CH_3$ | 3-Cl | H | |
| 16 | $CH_3$ | 3-$C_2H_5$ | H | |
| 17 | $CH_3$ | 3-i-$C_3H_7$ | H | |
| 18 | $CH_3$ | 3-F | 4-Cl | |
| 19 | $CH_3$ | 3-Cl | 4-Cl | |
| 20 | $CH_3$ | 3-$CH_3$ | 5-$CH_3$ | |
| 21 | $CH_3$ | 3-Cl | 4-F | |

Die erfindungsgemäßen Substanzen können beispielsweise in Form von direkt versprühbaren Lösungen, Pulvern, Suspensionen, auch hochprozentige wäßrige, ölige oder sonstige Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten und Öldispersionen kommen Mineralölfraktionen von mittlerem bis hohem Siedepunkt wie Kerosin oder Dieselöl, ferner Kohlenteeröle, sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, wie z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäuren, Phenolsulfonsäure, Alkylarylsulfonate, Alkylsulfate, Alkylsulfonate, Alkali- und Erdalkalisalze der Dibutylnaphthalinsulfonsäure, Laurylâthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylen-octylphenoläther, äthoxyliertes Isooctylphenol-, Octylphenol-, Nonylphenol, Alkylphenolpolyglykoläther, Tributylphenylpolyglykoläther, Alkalarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose in Betracht.

Pulver, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Attaclay, Kalkstein, Kreide, Talkum, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehle, Baumrinden-, Holz- und Nußschalenmehl, Cellulosepulver und andere feste Trägerstoffe.

Die Formulierungen enthalten zwischen 0,1 und 95 Gew.%, vorzugsweise zwischen 0,5 und 90 Gew.%, Wirkstoff. Die Aufwandmengen betragen 0,1 bis 15 kg Wirkstoff/ha.

Beispiele für Formulierungen sind:

I. Man vermischt 90 Gewichtsteile der Verbindung 1 mit 10 Gewichtsteilen N-Methyl-$\alpha$-pyrrolidon und erhält eine Lösung, die zur Anwendung in Form kleinster Tropfen geeignet ist.

II. 20 Gewichtsteile der Verbindung 2 werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoäthanolamid, 5 Gewichtsteilen Calciumsalz der Dodecylbenzolsulfonsäure und 5 Gewichtsteilen des Anlagerungsproduktes von 40 Mol Äthylenoxid an 1 Mol Ricinusöl besteht. Durch Ausgießen und feines Verteilen der Lösung in 100 000 Gewichtsteilen Wasser erhält man eine wäßrige Dispersion, die 0,02 Gewichtsprozent des Wirkstoffs enthält.

III. 20 Gewichtsteile der Verbindung 6 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Äthylenoxid an 1 Mol Isooctylphenol und 10 Gewichtsteilen des Anlagerungsproduktes von 40 Mol Äthylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

IV. 20 Gewichtsteile der Verbindung 2 werden in einer Mischung gelöst, die aus 25 Gewichtsteilen Cyclohexanol, 65 Gewichtsteilen einer Mineralölfraktion vom Siedepunkt 210 bis 280°C und 10 Gewichtsteilen des Anlagerungsproduktes von 40 Mol Äthylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

V. 20 Gewichtsteile der Verbindung 6 werden mit 3 Gewichtsteilen des Natriumsalzes der Diisobutylnaphthalin-$\alpha$-sulfonsäure, 17 Gewichtsteilen des Natriumsalzes einer Ligninsulfonsäure aus einer Sulfit-Ablauge und 60 Gewichtsteilen pulverförmigem Kieselsäuregel gut vermischt und in einer Hammermühle vermahlen. Durch feines Verteilen der Mischung in 20 000 Gewichtsteilen Wasser enthält man eine Spritzbrühe, die 0,1 Gewichtsprozent des Wirkstoffs enthält.

VI. 3 Gewichtsteile der Verbindung 1 werden mit 97 Gewichtsteilen feinteiligem Kaolin innig vermischt. Man erhält auf diese Weise ein Stäubemittel, das 3 Gewichtsprozent des Wirkstoffs enthält.

VII. 30 Gewichtsteile der Verbindung 2 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt, man erhält auf diese Weise eine Aufbereitung des Wirkstoffs mit guter Haftfähigkeit.

IX. 40 Gewichtsteile der Verbindung 11 werden mit 10 Teilen Natriumsalz eines Phenolsulfonsäure-Harnstoff-Formaldehyd-Kondensats, 2 Teilen Kieselgel und 48 Teilen Wasser innig vermischt. Man erhält eine stabile wäßrige Dispersion. Durch Verdünnen mit 100 000 Gewichtsteilen Wasser erhält man eine wäßrige Dispersion, die 0,04 Gewichtsprozent Wirkstoff enthält.

X. 20 Teile der Verbindung 2 werden mit 2 Teilen Calciumsalz der Dodecylbenzolsulfonsäure, 8 Teilen Fettalkohol-polyglykoläther, 2 Teilen Natriumsalz eines Phenol-Harnstoff-Formaldehyd-Kondensates und 68 Teilen eines paraffinischen Mineralöls innig vermischt. Man erhält eine stabile ölige Dispersion.

Der Einfluß verschiedener Vertreter der erfindungsgemäßen Verbindungen auf das Wachstum von unerwünschten Pflanzen im Vergleich zu bekannten Wirkstoffen wird durch die folgenden Gewächshaus- und Freilandversuche demonstriert.

## I. Gewächshausversuche

Als Kulturgefäße dienten Plastikblumentöpfe von 300 $cm^3$ Inhalt und lehmigem Sand mit etwa 1,5% Humus als Substrat. Für die Nachauflaufbehandlung wurden die Pflanzen je nach Wuchsform bis zu einer Höhe von 3 bis 10 cm angezogen. Die Wirkstoffe wurden dann in Wasser als Verteilungsmittel suspendiert oder emulgiert und mittels fein verteilender Düsen auf die Blätter der Testpflanzen und die noch zu treffende freie Bodenfläche gespritzt. Den Temperaturansprüchen der Testpflanzen wurde durch Aufstellen in kühleren oder wärmeren Sektionen der Gewächshausanlagen Rechnung getragen. Die Versuchsperiode erstreckte sich über 2 bis 4 Wochen. Während dieser Zeit wurden die Pflanzen gepflegt und ihre Reaktion auf die einzelnen Behandlungen ausgewertet.

## II. Freilandversuche

Bei den Ergebnissen aus den Freilandversuchen handelt es sich um Ergebnisse von sehr frühen Nachauflaufbehandlungen auf Kleinparzellen. Das Ausbringen der Substanzen, in Wasser als Träger- und Verteilungsmedium emulgiert oder suspendiert, erfolgte mit Hilfe einer motorgetriebenen, auf einen Traktor montierten Parzellenspritze zu einem Zeitpunkt, wo die Keimblätter der Kulturpflanzen und Unkräuter an der Erdoberfläche sichtbar wurden.

Die Auswertung der Gewächshaus- und der Freilandversuche wurde nach einer Skala von 0 bis 100 vorgenommen. Dabei bedeutet 0 keine Schädigung oder normaler Auflauf und 100 kein Aufgang der Pflanzen bzw. völlige Zerstörung zumindest der oberirdischen Sproßteile.

In den Versuchen werden die in Tabelle 1 aufgeführten Pflanzenarten getestet. Die Tabellen 2 und 3 enthalten die Versuchsergebnisse, die zeigen, daß die erfindungsgemäßen Verbindungen sich im Vergleich zu bekannten Diurethanen durch eine gute herbizide Wirkung gegen eine Reihe breitblättriger Unkräuter bei gleichzeitig besserer Verträglichkeit gegenüber bestimmten Kulturpflanzen auszeichnen.

Tabelle 1

Liste der Pflanzennamen

| Botanischer Name | Abkürzung in Tabelle | Deutscher Name | Englischer Name |
|---|---|---|---|
| Arachys hypogaea | | Erdnuß | peanuts (groundnuts) |
| Beta vulgaris | | Zuckerrübe | sugarbeets |
| Chenopodium album | | Weißer Gänsefuß | lambsquarters (goosefoot) |
| Euphorbia geniculata | | Südamerikanische Wolfsmilchart | Southamerican member of the spurge family |
| Galinsoga spp. | | Franzosenkraut-Arten | gallant soldier |
| Glycine max | | Sojabohnen | soybeans |
| Lamium amplexicaule | | Stengelumfassende Taubnessel | henbit |

Tabelle 2

Selektive Bekämpfung von unerwünschten Pflanzen bei Nachauflaufanwendung im Gewächshaus

| Verbindungen | Aufwandmenge kg a.S./ha | Schädigung (in %) an den Testpflanzen | | | | |
|---|---|---|---|---|---|---|
| | | Arachys hypogaea | Beta vulgaris | Glycine max | Chenopodium album | Euphorbia geniculata |
| 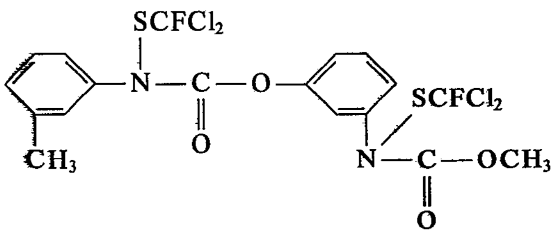 | 1,0 | 0 | 1 | 5 | 96 | 99 |
| 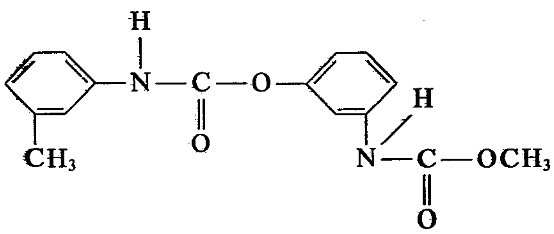 (bekannt) | 1,0 | 6 | 0 | 14 | 100 | 55 |

Tabelle 3

Selektive herbizide Wirkung bei Spritzung in den Auflauf von Zuckerrüben und Unkräutern im Freiland

| Verbindungen | Aufwandmenge kg a.S./ha | Schädigung (in %) an den Testpflanzen | | | |
|---|---|---|---|---|---|
| | | Beta vulgaris | Chenopodium album | Galinsoga spp. | Lamium amplexicaule |
| 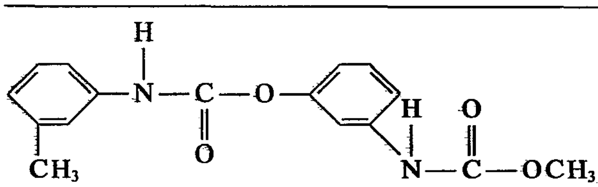 (bekannt) | 0,75 | 15 | 99 | 100 | 100 |
| | 1,0 | 24 | 99 | 100 | 100 |
| 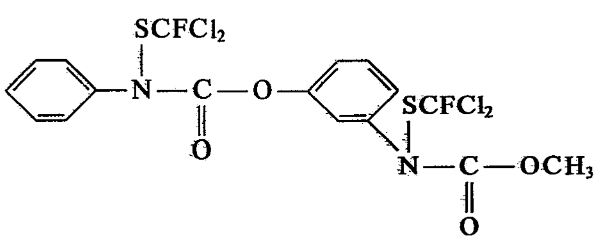 | 0,75 | 0 | 94 | 100 | 100 |
| | 1,0 | 5 | 98 | 100 | 100 |

Außer den in den Tabellen 2 und 3 genannten können die erfindungsgemäßen Verbindungen noch in zahlreichen anderen Kulturen zur Bekämpfung von unerwünschten Pflanzen eingesetzt werden. In Betracht kommen beispielsweise die folgenden Kulturen:

| Botanischer Name | Deutscher Name | Englischer Name |
|---|---|---|
| Allium cepa | Küchenzwiebel | onions |
| Ananas comosus | Ananas | pineapple |
| Arachis hypogaea | Erdnuß | peanuts (groundnuts) |
| Asparagus officinalis | Spargel | asparagus |
| Avena sativa | Hafer | oats |
| Beta vulgaris spp. altissima | Zuckerrübe | sugarbeets |
| Beta vulgaris spp. rapa | Futterrübe | fooder beets |
| Beta vulgaris spp. esculenta | Rote Rübe | table beets, red beets |
| Brassica napus var. napus | Raps | rape |
| Brassica napus var. napobrassica | Kohlrübe | |
| Brassica napus var. rapa | Weiße Rübe | turnips |
| Brassica rapas var. silvestris | Rübsen | |
| Camellia sinensis | Teestrauch | tea plants |
| Carthamus tinctorius | Saflor – Färberdistel | safflower |
| Carya illinoinensis | Pekannußbaum | pecan trees |
| Citrus limon | Zitrone | lemon |
| Citrus maxima | Pampelmuse | grapefruits |
| Citrus reticulata | Mandarine | |
| Citrus sinensis | Apfelsine, Orange | orange trees |
| Coffea arabica (Coffea canephora, Coffea liberica) | Kaffee | coffee plants |
| Cucumis melo | Melone | melons |
| Cucumis sativus | Gurke | cucumber |
| Cynodon dactylon | Bermudagras | Bermudagrass in turfs and lawns |
| Daucus carota | Möhre | carrots |
| Elaeis guineensis | Ölpalme | oil palms |
| Fragaria vesca | Erdbeere | strawberries |
| Glycine max | Sojabohne | soybeans |

Fortsetzung

| Botanischer Name | Deutscher Name | Englischer Name |
|---|---|---|
| Gossypium hirsutum (Gossypium arboreum Gossypium herbaceum Gossypium vitifolium) | Baumwolle | cotton |
| Helianthus annuus | Sonnenblume | sunflowers |
| Helianthus tuberosus | Topinambur | |
| Hevea brasiliensis | Parakautschukbaum | rubber plants |
| Hordeum vulgare | Gerste | barley |
| Humulus lupulus | Hopfen | hop |
| Ipomoea batatas | Süßkartoffeln | sweet potato |
| Juglans regia | Walnußbaum | walnut-trees |
| Lactuca sativa | Kopfsalat | lettuce |
| Lens culinaris | Linse | lentils |
| Linum usitatissimum | Faserlein | flax |
| Lycopersicon lycopersicum | Tomate | tomato |
| Malus spp. | Apfel | apple trees |
| Manihot esculenta | Maniok | cassava |
| Medicago sativa | Luzerne | alfalfa (lucerne) |
| Mentha piperita | Pfefferminze | peppermint |
| Musa spp. | Obst- und Mehlbanane | banana plants |
| Nicotiana tabacum (N. rustica) | Tabak | tabacco |
| Olea europaea | Ölbaum | olive trees |
| Oryza sativa | Reis | rice |
| Panicum miliaceum | Rispenhirse | |
| Phaseolus lunatus | Mondbohne | limabeans |
| Phaseolus mungo | Erdbohne | mungbeans |
| Phaseolus vulgaris | Buschbohnen | snapbeans, green beans, dry beans |
| Pennisetum glaucum | Perl- oder Rohrkolben-hirse | |
| Petroselinum crispum spp. tuberosum | Wurzelpetersilie | parsley |
| Picea abies | Rotfichte | Norway spruce |

Fortsetzung

| Botanischer Name | Deutscher Name | Englischer Name |
|---|---|---|
| Albies alba | ·Weißtanne | fire |
| Pinus spp. | Kiefer | pine trees |
| Pisum sativum | Gartenerbse | English peas |
| Prunus avium | Süßkirsche | cherry trees |
| Prunus domestica | Pflaume | plum trees |
| Prunus dulcis | Mandelbaum | almond trees |
| Prunus persica | Pfirsich | peach trees |
| Pyrus communis | Birne | pear trees |
| Ribes sylvestre | Rote Johannisbeere | red currants |
| Ribes uva-crispa | Stachelbeere | |
| Ricinus communis | Rizinus | |
| Saccharum officinarum | Zuckerrohr | sugar cane |
| Secale cereale | Roggen | rye |
| Sesamum indicum | Sesam | Sesame |
| Solanum tuberosum | Kartoffel | Irish potatoes |
| Sorghum bicolor (s. vulgare) | Mohrenhirse | sorghum |
| Sorghum dochna | Zuckerhirse | |
| Spinacia oleracea | Spinat | spinach |
| Theobroma cacao | Kakaobaum | cacao plants |
| Trifolium pratense | Rotklee | red clover |
| Triticum aestivum | Weizen | wheat |
| Vaccinium corymbosum | Kulturheidelbeere | blueberry |
| Vaccinium vitis-idaea | Preißelbeere | cranberry |
| Vicia faba | Pferdebohnen | tick beans |
| Vigna sinensis (V. unguiculata) | Kuhbohne | cow peas |
| Vitis vinifera | Weinrebe | grapes |
| Zea mays | Mais | Indian corn, sweet corn, maize |

Die neuen herbiziden Wirkstoffe können mit zahlreichen Vertretern anderer herbizider oder wachstumsregulierender Wirkstoffgruppen gemischt und gemeinsam ausgebracht werden. Beispielsweise kommen als Mischungspartner Diazine, Benzothiadiazinone, 2,6-Dinitroaniline, N-Phenylcarbamate, Thiolcarbamate, Halogencarbonsäuren, Triazine, Amide, Harnstoffe, Diphenyläther, Triazinone, Uracile, Benzofuranderivate und andere in Betracht. Solche Kombinationen dienen zur Verbreiterung

des Wirkungsspektrums. Eine Reihe von Wirkstoffen, welche zusammen mit den neuen Verbindungen für verschiedenste Anwendungsbereiche sinnvolle Mischungen ergeben, werden beispielhaft aufgeführt:

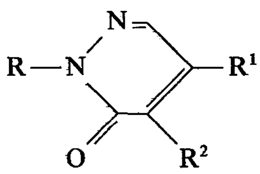

| R | $R^1$ | $R^2$ |
|---|---|---|
| 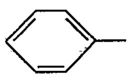 | $NH_2$ | Cl |
| 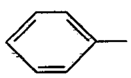 | $NH_2$ | Br |
| 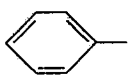 | $OCH_3$ | $OCH_3$ |
| 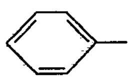 | $N(CH_3)_2$ | Cl |
| 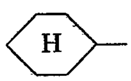 | $OCH_3$ | $OCH_3$ |
| 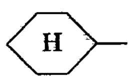 | $NH_2$ | Cl |
| 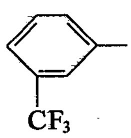 | $N(CH_3)_2$ | Cl |
| 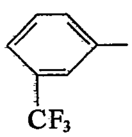 | $NHCH_3$ | Cl |
| 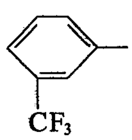 | $OCH_3$ | Cl |
| 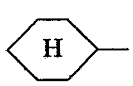 | $NH_2$ | Br |
| 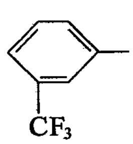 | $OCH_3$ | $OCH_3$ |
| 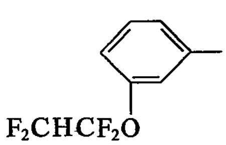 | $NHCH_3$ | Cl |

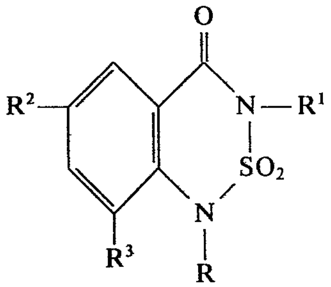

| R | $R^1$ | $R^2$ | $R^3$ |
|---|---|---|---|
| H | i-$C_3H_7$ | H | H (Salze) |
| H | i-$C_3H_7$ | H | $CH_3$ (Salze) |
| H | i-$C_3H_7$ | H | Cl (Salze) |
| $CH_2$—$OCH_3$ | i-$C_3H_7$ | H | H |
| H | i-$C_3H_7$ | H | F (Salze) |
| $CH_2$—$OCH_3$ | i-$C_3H_7$ | H | Cl |
| $CH_2$—$OCH_3$ | i-$C_3H_7$ | H | F |
| CN | i-$C_3H_7$ | H | Cl |

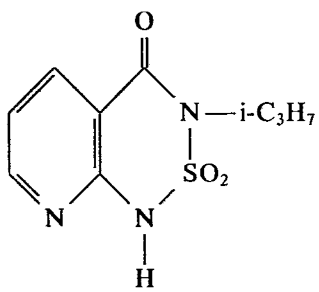

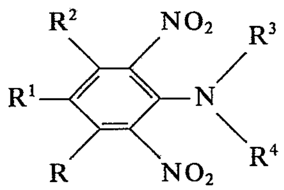

| R | $R^1$ | $R^2$ | $R^3$ | $R^4$ |
|---|---|---|---|---|
| H | $H_3CSO_2$ | H | $n\text{-}C_3H_7$ | $n\text{-}C_3H_7$ |
| H | $F_3C$ | H | $C_2H_5$ | $C_4H_9$ |
| H | $F_3C$ | H | $n\text{-}C_3H_7$ | $n\text{-}C_3H_7$ |
| H | $F_3C$ | H | $-CH_2-CH_2Cl$ | $n\text{-}C_3H_7$ |
| H | $tert\text{-}C_4H_9$ | H | $sec\text{-}C_4H_9$ | $sec\text{-}C_4H_9$ |
| H | $SO_2NH_2$ | H | $n\text{-}C_3H_7$ | $n\text{-}C_3H_7$ |
| H | $F_3C$ | H | $n\text{-}C_3H_7$ | $-CH_2-$ 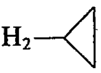 |
| $H_3C$ | $H_3C$ | H | H | $sec\text{-}C_4H_9$ |
| $H_3C$ | $H_3C$ | H | H | $-CH(C_2H_5)_2$ |
| H | $F_3C$ | $NH_2$ | $n\text{-}C_3H_7$ | $n\text{-}C_3H_7$ |
| H | $H_3C$ | H | $n\text{-}C_3H_7$ | $n\text{-}C_3H_7$ |
| H | $i\text{-}C_3H_7$ | H | $n\text{-}C_3H_7$ | $n\text{-}C_3H_7$ |

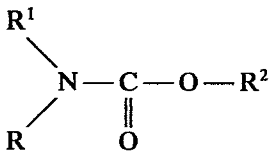

| R | $R^1$ | $R^2$ |
|---|---|---|
| 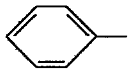 | H | i-$C_3H_7$ |
| $CH_3$ | H | 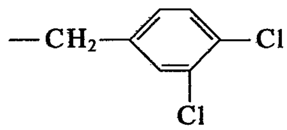 |
| 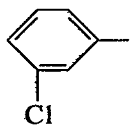 | H | 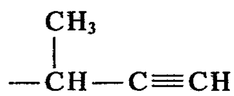 |
| 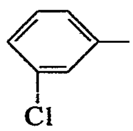 | H | $-CH_2-C\equiv C-CH_2Cl$ |
| 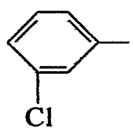 | H | i-$C_3H_7$ |
| 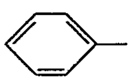 | H | 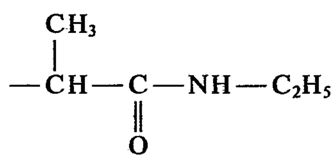 |
| 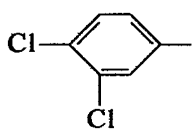 | H | $CH_3$ |
| 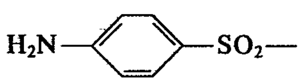 | H | $CH_3$ |
| $CH_3$ | H | 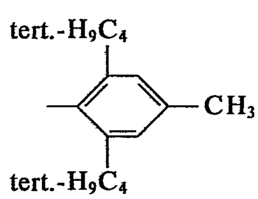 |
| 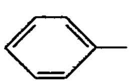 | H | 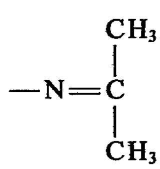 |

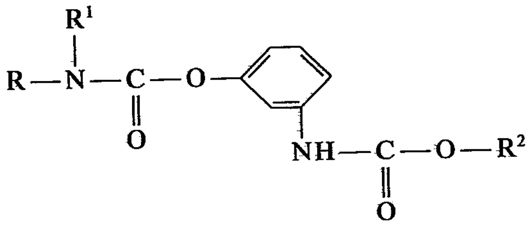

| R | $R^1$ | $R^2$ |
|---|---|---|
| 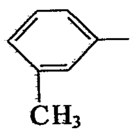 | H | $CH_3$ |
| 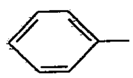 | H | $C_2H_5$ |
| 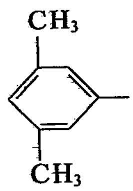 | H | $C_2H_5$ |
| 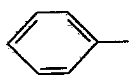 | $CH_3$ | $CH_3$ |
| 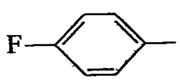 | H | $CH_3$ |
| 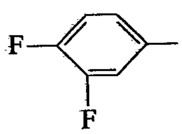 | H | $C_2H_5$ |
| 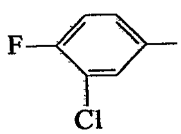 | H | $C_2H_5$ |
| 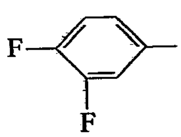 | H | $CH_3$ |
| 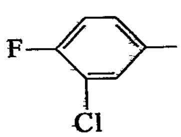 | H | $CH_3$ |

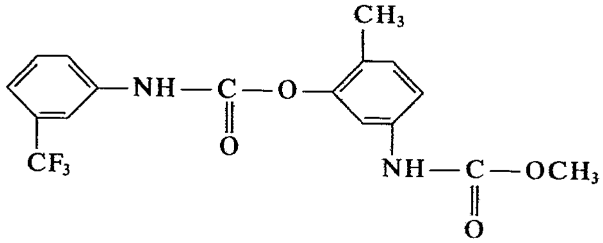

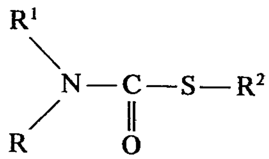

| R | $R^1$ | $R^2$ |
|---|---|---|
| i-$C_3H_7$ | i-$C_3H_7$ | $-CH_2-CCl{=}CCl_2$ |
| i-$C_3H_7$ | i-$C_3H_7$ | $-CH_2-CCl{=}CHCl$ |
| n-$C_3H_7$ | n-$C_3H_7$ | $C_2H_5$ |
| 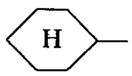 | $C_2H_5$ | $C_2H_5$ |
| sec-$C_4H_9$ | sec-$C_4H_9$ | $C_2H_5$ |
| n-$C_3H_7$ | n-$C_3H_7$ | n-$C_3H_7$ |
| $C_2H_5$ | $C_2H_5$ | $-CH_2-$ 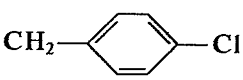 |
| sec-$C_4H_9$ | sec-$C_4H_9$ | $-CH_2-$ 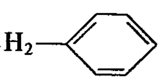 |
| 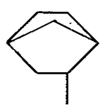 | $C_2H_5$ | $C_2H_5$ |
| i-$C_3H_7$ | i-$C_3H_7$ | $-CH_2-$ 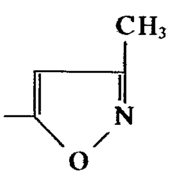 |
| i-$C_3H_7$ | i-$C_3H_7$ | $-CH_2-$ 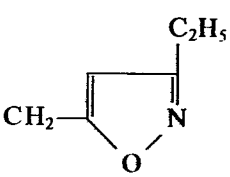 |

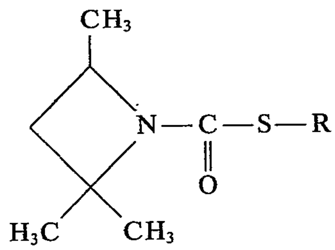

| R |
|---|
| $-CH_2-CCl=CHCl$ |
| $-CH_2-CCl=CCl_2$ |

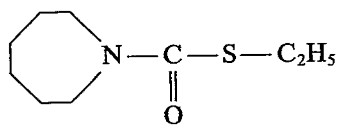

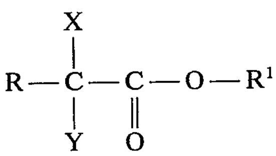

| R | X | Y | $R^1$ |
|---|---|---|---|
| $CH_3$ | Cl | Cl | Na |
| Cl | Cl | Cl | Na |
| 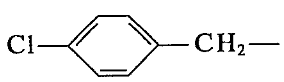 | Cl | H | $CH_3$ |
| 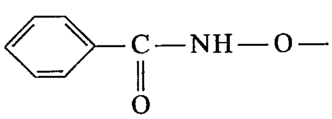 | H | H | H (Salze) |
| 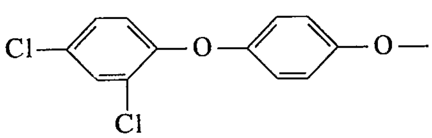 | H | $CH_3$ | $CH_3$ |
| 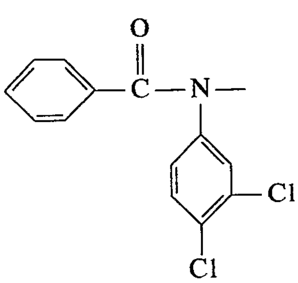 | H | $CH_3$ | $C_2H_5$ |
| $C_2H_5$ | Cl | Cl | Na |

Fortsetzung

| R | X | Y | $R^1$ |
|---|---|---|---|
| 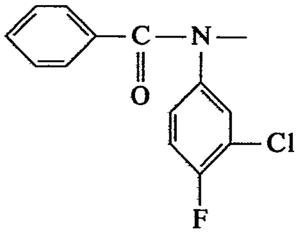 | H | $CH_3$ | $i\text{-}C_3H_7$ |
| 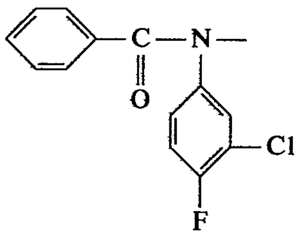 | H | $CH_3$ | $CH_3$ |
| 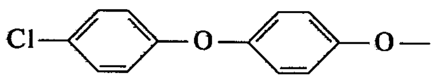 | H | $CH_3$ | $-CH_2-CH(CH_3)_2$ |
| 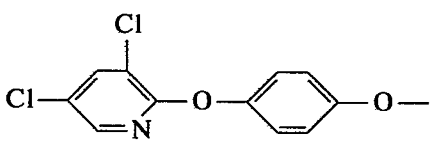 | H | $CH_3$ | Na |
| 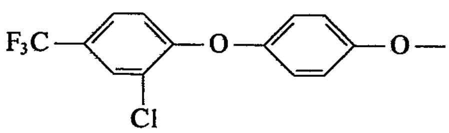 | H | $CH_3$ | Na |
| 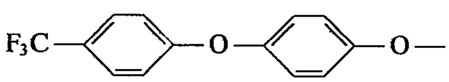 | H | $CH_3$ | $CH_3$ |

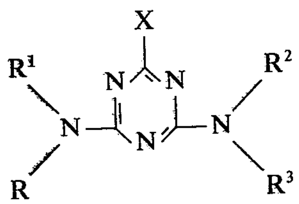

| R | R' | X | $R^2$ | $R^3$ |
|---|---|---|---|---|
| H | tert-$C_4H_9$ | $SCH_3$ | H | $C_2H_5$ |
| H | $C_2H_5$ | $SCH_3$ | H | $C_2H_5$ |
| H | i-$C_3H_7$ | $SCH_3$ | H | $C_2H_5$ |
| H | $CH_3$ | $SCH_3$ | H | i-$C_3H_7$ |
| H | i-$C_3H_7$ | Cl | H | $C_2H_5$ |
| H | i-$C_3H_7$ | Cl | H | 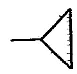 |
| H | $C_2H_5$ | Cl | H | $C_2H_5$ |
| H | $C_2H_5$ | Cl | H | 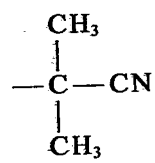 |
| H | i-$C_3H_7$ | Cl | H | i-$C_3H_7$ |
| H | i-$C_3H_7$ | $OCH_3$ | H | i-$C_3H_7$ |
| H | 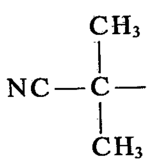 | Cl | H | 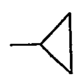 |
| H | $C_2H_5$ | Cl | H | 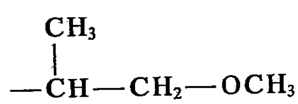 |
| H | $C_2H_5$ | Cl | H | 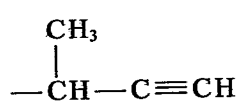 |

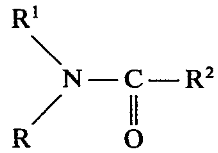

| R | $R^1$ | $R^2$ |
|---|---|---|
| $CH_3$ | $CH_3$ | $CH(C_6H_5)_2$ |
| 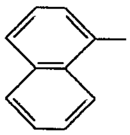 | H | 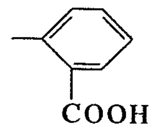 |
| 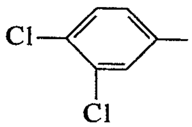 | H | 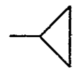 |
| 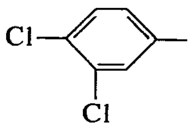 | H | $C_2H_5$ |
| 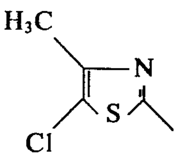 | H | $C_2H_5$ |
| 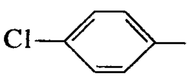 | H | 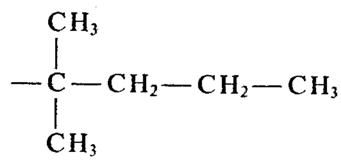 |
| 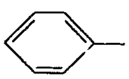 | 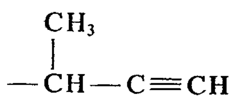 | $CH_2Cl$ |
| 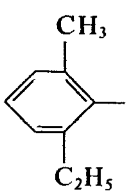 | 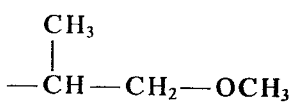 | $CH_2Cl$ |
| 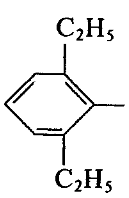 | $-CH_2-OCH_3$ | $CH_2Cl$ |

Fortsetzung

| R | $R^1$ | $R^2$ |
|---|---|---|
| 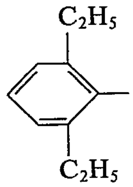 | 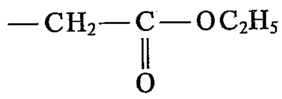 | $CH_2Cl$ |
| 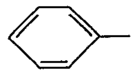 | $i\text{-}C_3H_7$ | $CH_2Cl$ |
| 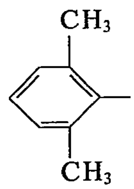 | $—CH_2—O—CH_2—CH(CH_3)_2$ | $CH_2Cl$ |
| 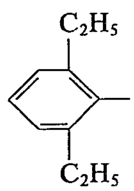 | $—CH_2—O—n\text{-}C_4H_9$ | $CH_2Cl$ |
| 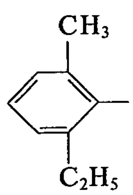 | $—CH_2—O—C_2H_5$ | $CH_2Cl$ |
| 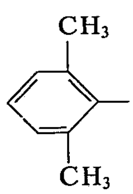 | 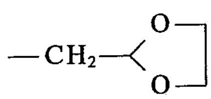 | $CH_2Cl$ |
| 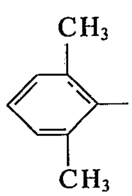 | $—CH_2—CH_2—OCH_3$ | $CH_2Cl$ |
| 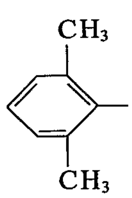 | 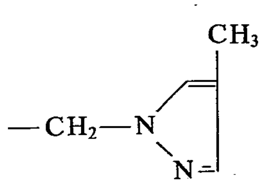 | $CH_2Cl$ |

Fortsetzung

| R | $R^1$ | $R^2$ |
|---|---|---|
| 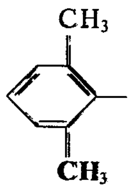 | 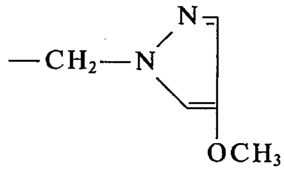 | $CH_2Cl$ |
| 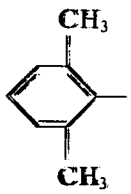 | 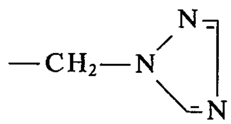 | $CH_2Cl$ |
| 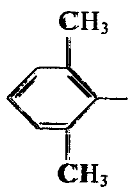 | 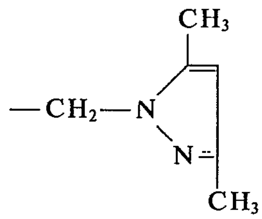 | $CH_2Cl$ |
| $CH_3$ | $CH_3$ | 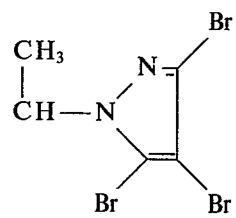 |
| $C_2H_5$ | $C_2H_5$ | 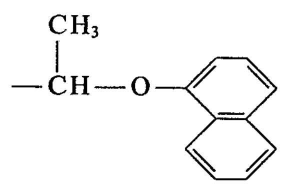 |
| $CH_2{=}CH{-}CH_2{-}$ | $CH_2{=}CH{-}CH_2{-}$ | $CH_2Cl$ |
| 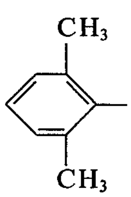 | 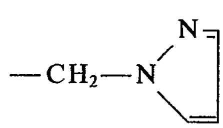 | $CH_2Cl$ |
| 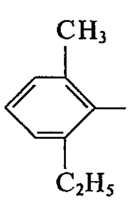 | 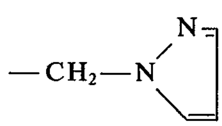 | $CH_2Cl$ |

Fortsetzung

| R | $R^1$ | $R^2$ |
|---|---|---|
| 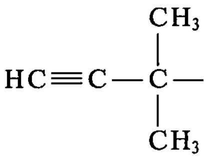 | H | 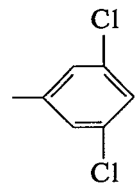 |
| 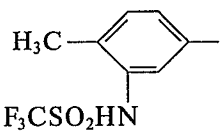 | H | $CH_3$ |
| 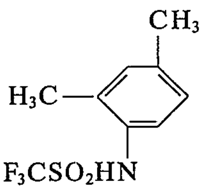 | H | $CH_3$ |

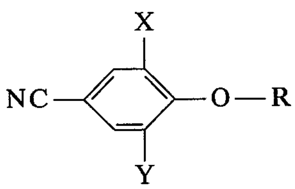

| X | Y | R |
|---|---|---|
| Br | Br | H (Salze) |
| J | J | H (Salze) |
| Br | Br | 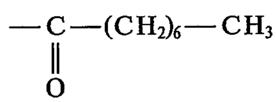 |
| 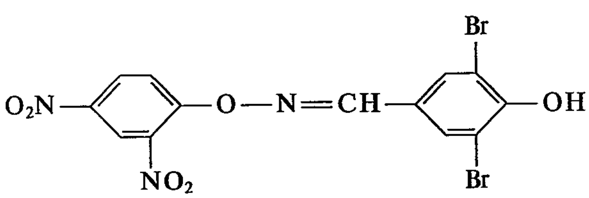 | | Salze, Ester |
| 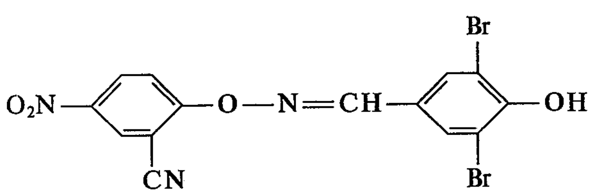 | | Salze, Ester |

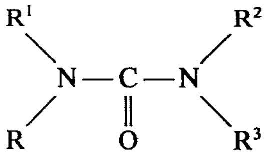

| R | $R^1$ | $R^2$ | $R^3$ |
|---|---|---|---|
| 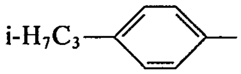 | H | $CH_3$ | $CH_3$ |
| 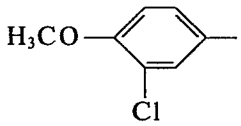 | H | $CH_3$ | $CH_3$ |
| 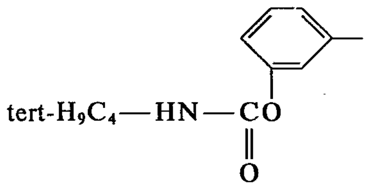 | H | $CH_3$ | $CH_3$ |
| 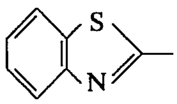 | H | $CH_3$ | H |
| 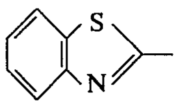 | $CH_3$ | $CH_3$ | H |
| 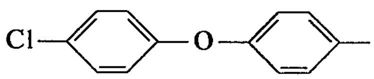 | H | $CH_3$ | $CH_3$ |
| 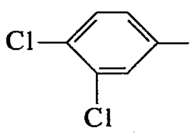 | H | $CH_3$ | $CH_3$ |
| 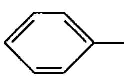 | H | 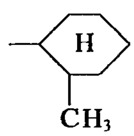 | H |
| 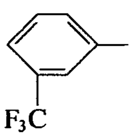 | H | $CH_3$ | $CH_3$ |
| 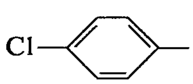 | H | $CH_3$ | 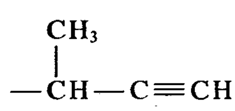 |
| 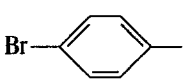 | H | $CH_3$ | $OCH_3$ |

Fortsetzung

| R | $R^1$ | $R^2$ | $R^3$ |
|---|---|---|---|
| 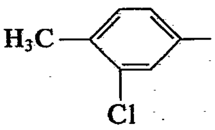 | H | $CH_3$ | $CH_3$ |
| 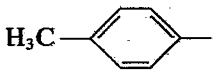 | H | 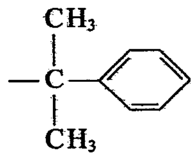 | H |
| 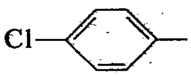 | H | $CH_3$ | $OCH_3$ |
| 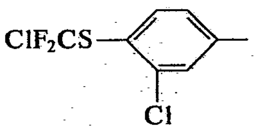 | H | $CH_3$ | $CH_3$ |
| 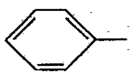 | H | $CH_3$ | $CH_3$ |
| 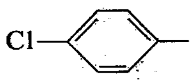 | H | $CH_3$ | $CH_3$ |
| 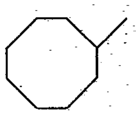 | H | $CH_3$ | $CH_3$ |
| 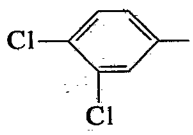 | H | $CH_3$ | $OCH_3$ |
| 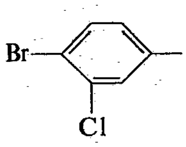 | H | $CH_3$ | $OCH_3$ |
| 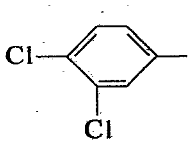 | H | $CH_3$ | H |
| 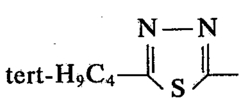 | $CH_3$ | $CH_3$ | H |
| 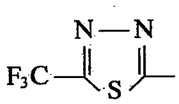 | $CH_3$ | $CH_3$ | H |
| 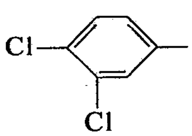 | H | $C_2H_5$ | $C_2H_5$ |

Fortsetzung

| R | $R^1$ | $R^2$ | $R^3$ |
|---|---|---|---|
| 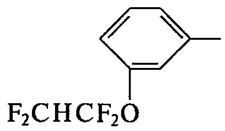 | H | $CH_3$ | $CH_3$ |
| 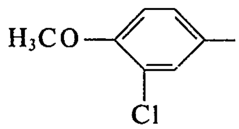 | H | $CH_3$ | $OCH_3$ |
| 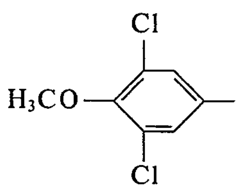 | H | $CH_3$ | $CH_3$ |

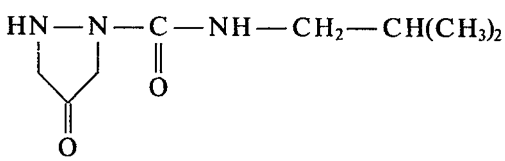

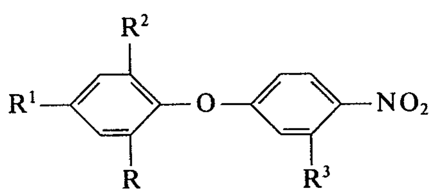

| R | $R^1$ | $R^2$ | $R^3$ |
|---|---|---|---|
| Cl | Cl | Cl | H |
| F | Cl | Cl | H |
| $NO_2$ | $CF_3$ | H | H |
| Cl | $CF_3$ | H | COOH (Salze) |
| Cl | Cl | H | H |
| Cl | Cl | H | $OCH_3$ |
| Cl | Cl | H | $-\underset{\underset{O}{\|}}{C}-OCH_3$ |
| H | $CF_3$ | Cl | H |
| H | $CF_3$ | Cl | $OC_2H_5$ |

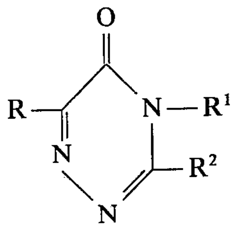

| R | $R^1$ | $R^2$ |
|---|---|---|
| tert-$C_4H_9$ | $NH_2$ | $SCH_3$ |
| tert-$C_4H_9$ | $-N{=}CH-CH(CH_3)_2$ | $SCH_3$ |
| 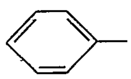 | $NH_2$ | $CH_3$ |

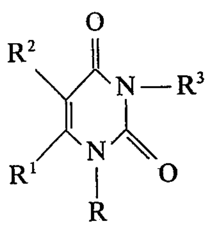

| R | $R^1$ | $R^2$ | $R^3$ |
|---|---|---|---|
| H | $CH_3$ | Br | $-\overset{\overset{CH_3}{\mid}}{CH}-C_2H_5$ |
| H | $CH_3$ | Br | i-$C_3H_7$ |
| H | $CH_3$ | Cl | tert-$C_4H_9$ |
| H | $CH_3$ | Cl | 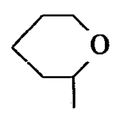 |

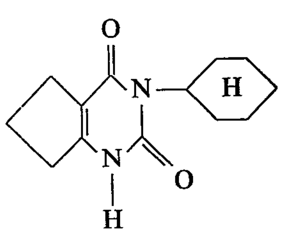

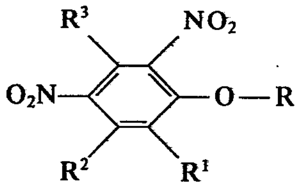

| R | $R^1$ | $R^2$ | $R^3$ |
|---|---|---|---|
| 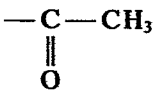 | sec-$C_4H_9$ | H | H |
| H | $CH_3$ | H | H (Salze, Ester) |
| H | sec-$C_4H_9$ | H | H (Salze, Ester) |
| 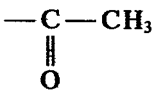 | tert-$C_4H_9$ | H | H |
| 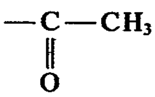 | tert-$C_4H_9$ | H | $CH_3$ |
| H | i-$C_3H_7$ | $CH_3$ | H (Salze, Ester) |
| H | tert-$C_4H_9$ | H | H (Salze) |

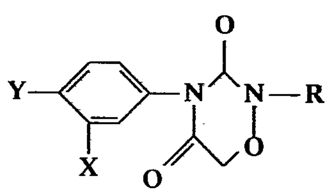

| X | Y | R |
|---|---|---|
| $CF_3$ | H | $CH_3$ |
| H | F | $CH_3$ |

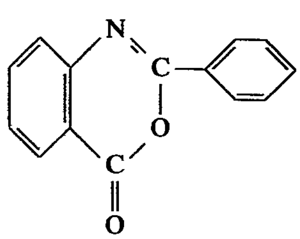

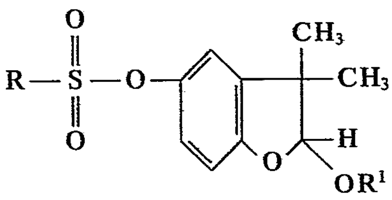

| R | $R^1$ |
|---|---|
| $CH_3$ | $C_2H_5$ |
| 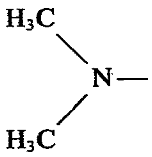 | $C_2H_5$ |
| 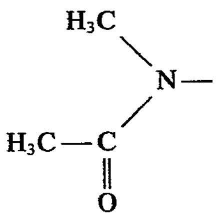 | $C_2H_5$ |

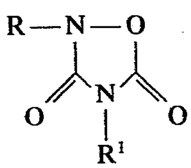

| R | $R^1$ |
|---|---|
| 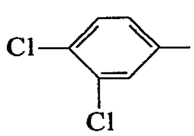 | $CH_3$ |
| 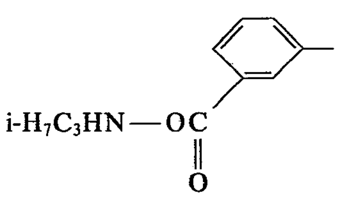 | $CH_3$ |
| 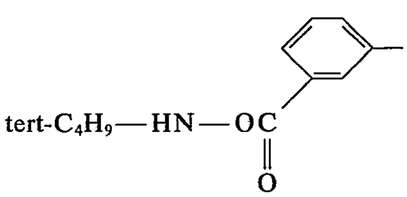 | $CH_3$ |

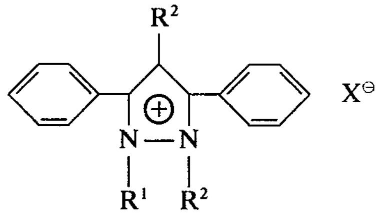

| R | $R^1$ | $R^2$ | X |
|---|---|---|---|
| $CH_3$ | $CH_3$ | H | 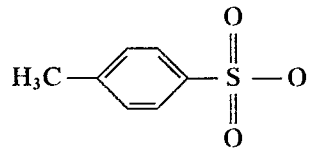 |
| $CH_3$ | $CH_3$ | Br | $CH_3OSO_2O$ |
| $CH_3$ | $CH_3$ | $CH_3$ | $CH_3OSO_2—O$ |
| $CH_3$ | $CH_3$ | $CH_3$ | $CF_3—SO_2$ |

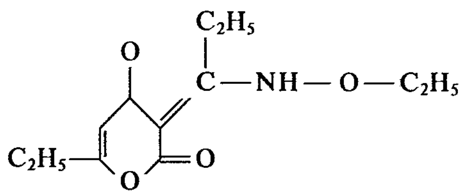

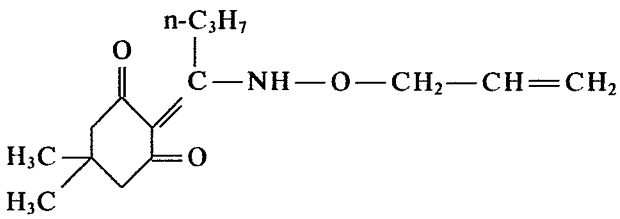

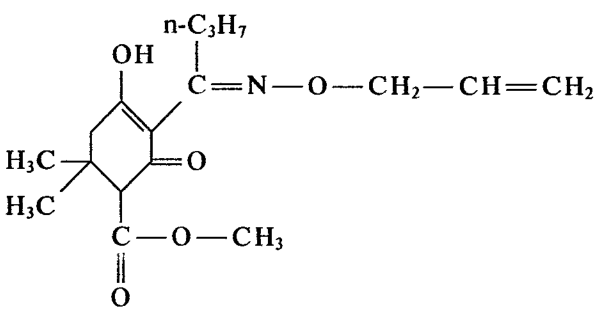

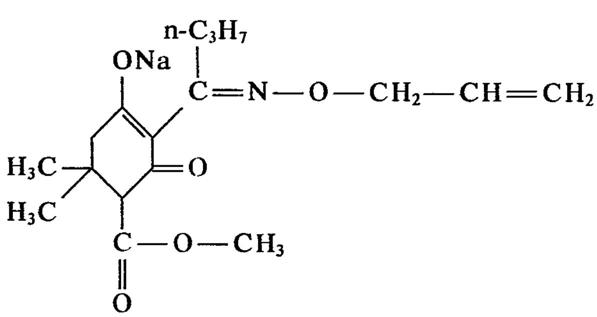

Fortsetzung

| R | $R^1$ | $R^2$ | X |
|---|---|---|---|

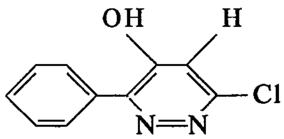 (Ester, Salze)

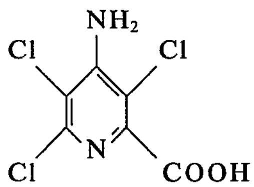 (Salze, Ester)

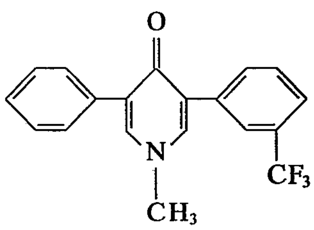

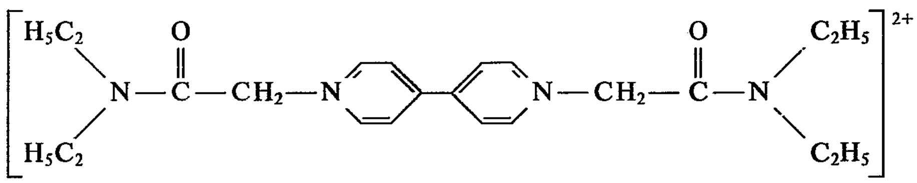 $2\ Cl^{\ominus}$

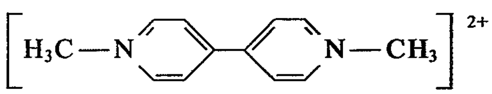 $\cdot\ 2\ CH_3OSO_3^{\ominus}$

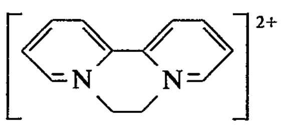 $2\ Br^{\ominus}$

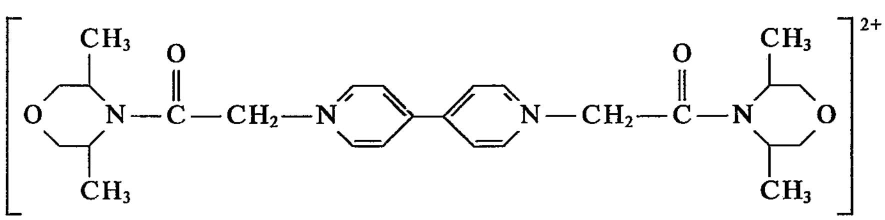 $2\ Cl^{\ominus}$

Fortsetzung

| R | $R^1$ | $R^2$ | X |
|---|---|---|---|

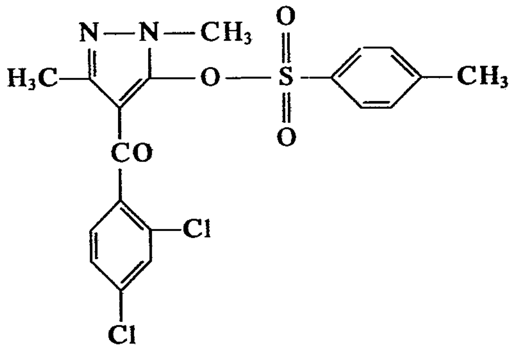

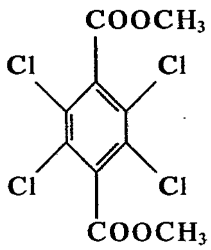

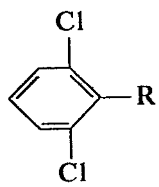

| R |
|---|
| CN |
| $CSNH_2$ |

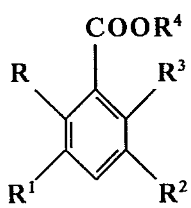

| R | $R^1$ | $R^2$ | $R^3$ | $R^4$ |
|---|---|---|---|---|
| H | Cl | $NH_2$ | Cl | (Salze, Ester, Amide) |
| Cl | Cl | H | Cl | Na |
| H | J | J | J | H |
| Cl | H | Cl | $OCH_3$ | H |
| Cl | Cl | H | Cl | $(CH_3)_2NH_2$ |

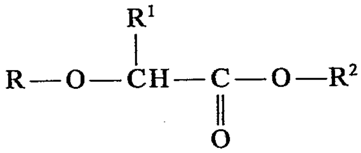

| R | $R^1$ | $R^2$ |
|---|---|---|
| 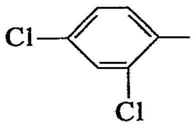 | $CH_3$ | H (Salze, Ester, Amide) |
| 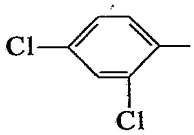 | H | H (Salze, Ester, Amide) |
| 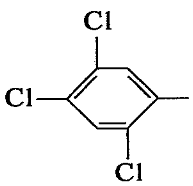 | H | H (Salze, Ester, Amide) |
| 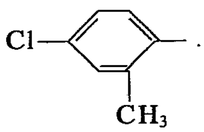 | H | H (Salze, Ester, Amide) |
| 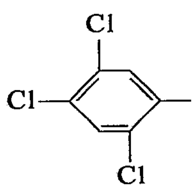 | $CH_3$ | H (Salze, Ester, Amide) |
| 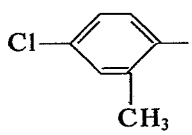 | $CH_3$ | H (Salze, Ester, Amide) |

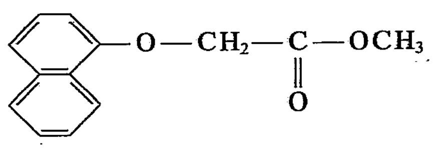

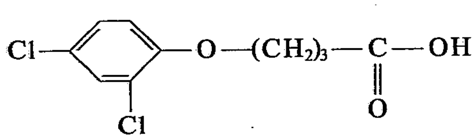 (Salze, Ester, Amide)

Fortsetzung

| R | $R^1$ | $R^2$ |
|---|---|---|
| 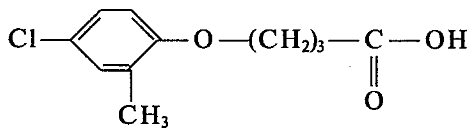 | | (Salze, Ester, Amide) |
| 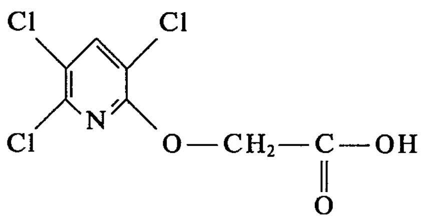 | | (Salze, Ester, Amide) |

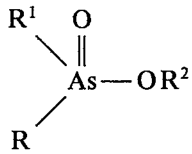

| R | $R^1$ | $R^2$ |
|---|---|---|
| OH | $CH_3$ | Na |
| $CH_3$ | $CH_3$ | Na |
| $CH_3$ | $CH_3$ | OH |
| ONa | $CH_3$ | Na |

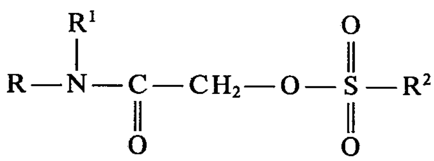

| R | $R^1$ | $R^2$ |
|---|---|---|
| 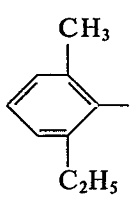 | $—CH_2—O—C_2H_5$ | $CH_3$ |
| 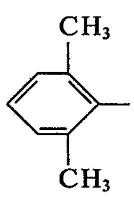 | $i\text{-}C_3H_7—O—CH_2$ | $CH_3$ |

Fortsetzung

| R | $R^1$ | $R^2$ |
|---|---|---|
| 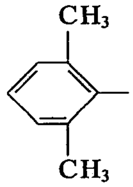 | $-CH_2-O-C_2H_5$ | $CH_3$ |
| 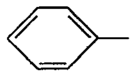 | i-$C_3H_5$ | $-NHCH_3$ |
| 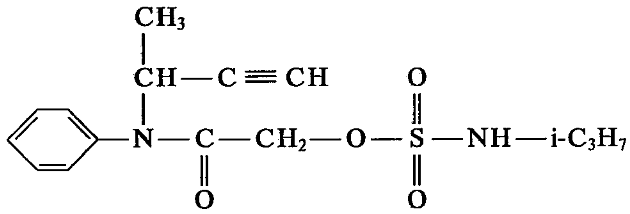 | | |
| 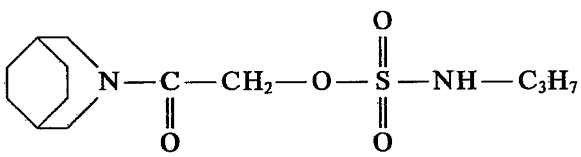 | | |
| 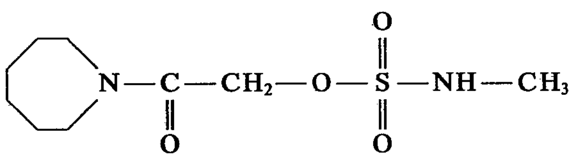 | | |
| 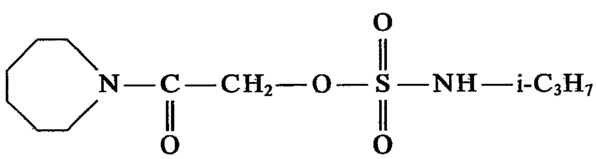 | | |
| 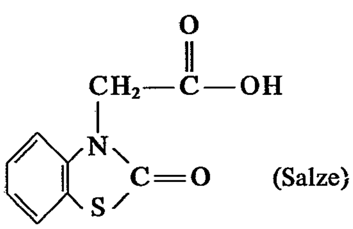 | (Salze) | |
| 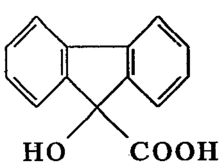 | (Salze, Ester) | |
| 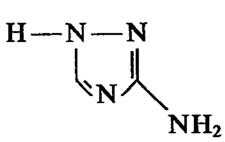 | | |

Fortsetzung

| R | R[1] | R[2] |
|---|---|---|
| 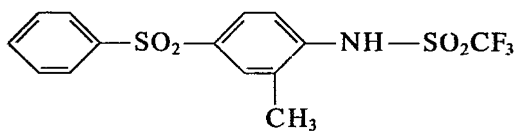 | | |
| 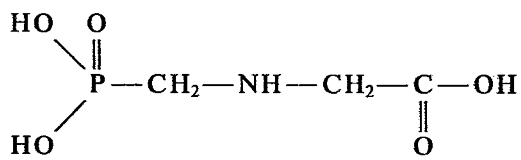 (Salze) | | |
| 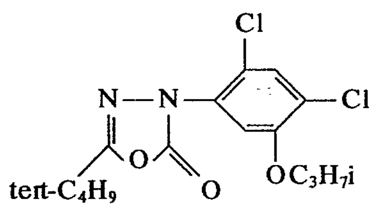 | | |
| 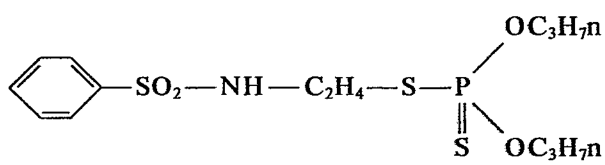 | | |
| 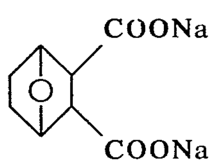 (und andere Salze) | | |
| 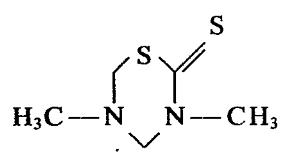 | | |
| 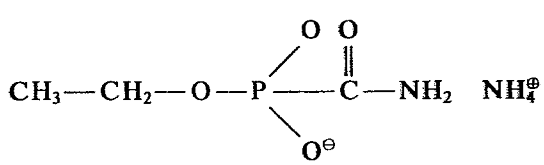 | | |
| 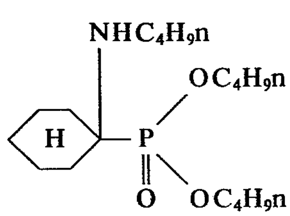 | | |
| 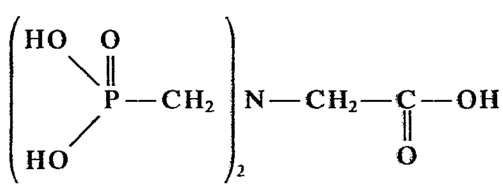 (Salze) | | |

Fortsetzung

| R | $R^1$ | $R^2$ |
|---|---|---|

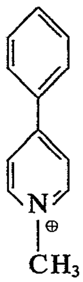 $Cl^{\ominus}$

$NH_4SCN$

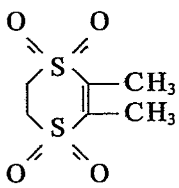

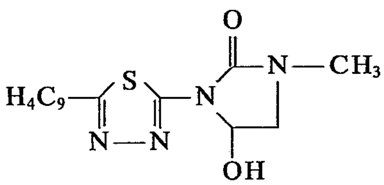

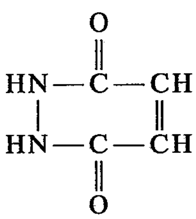 (Salze)

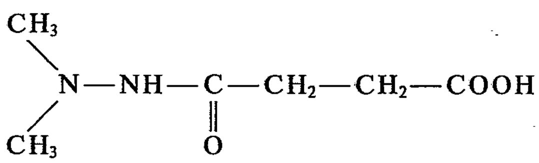

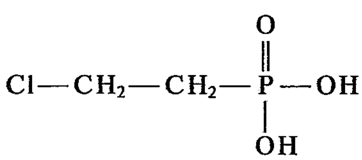

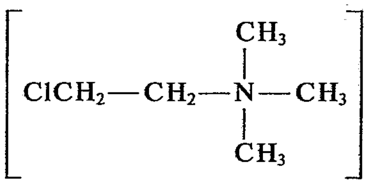 $Cl^{\ominus}$

Fortsetzung

| R | $R^1$ | $R^2$ |
|---|---|---|
| 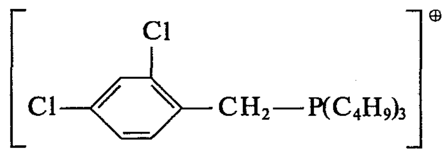 $Cl^{\ominus}$ | | |
| 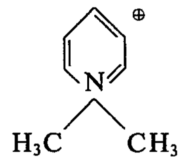 $Cl^{\ominus}$ | | |
| 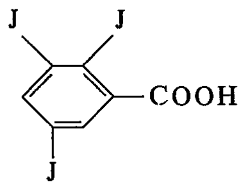 (Salze, Ester, Amide) | | |
| 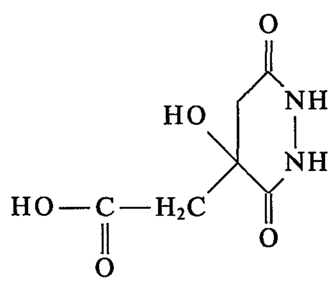 | | |
| 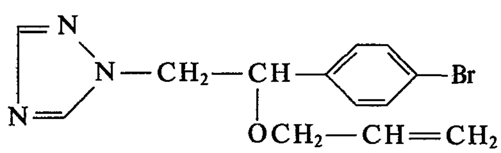 | | |
| 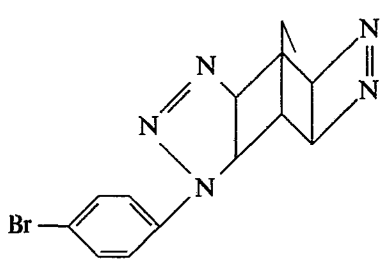 | | |
| 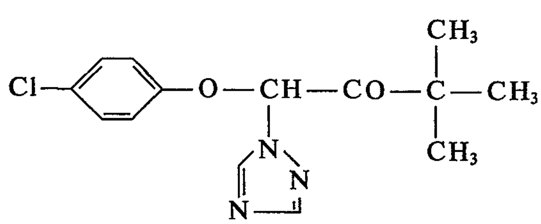 | | |

Außerdem ist es nützlich, die neuen erfindungsgemäßen Verbindungen allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phythopatogenen Pilzen bzw. Bakterien. Von Interesse sind ferner die Mischbarkeit mit Mineralstofflösungen, welche zur Behebung von Ernährungs- oder Spurenelementmängeln eingesetzt werden. Zu den Einzelwirkstoffen oder deren Mischungen können auch Öle verschiedenen Typs, Netz- oder Haftmittel sowie Antischaummittel zugesetzt werden.

**Patentansprüche für die Vertragsstaaten:** BE, CH, DE, FR, GB, IT, LU, NL und SE

1. N-sulfenylierte Diurethane der Formel I

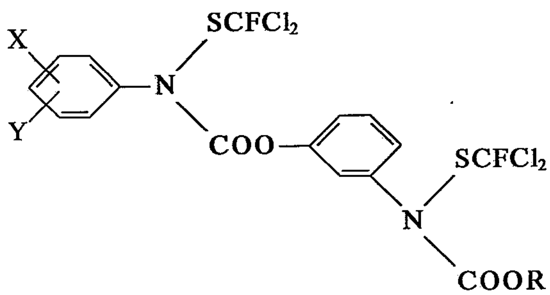

(I)

in der
R gegebenenfalls durch Halogen oder Alkoxy substituiertes Alkyl, Alkenyl oder Alkinyl mit jeweils bis zu 5 Kohlenstoffatomen und
X und Y gleich oder verschieden sind und Wasserstoff, Halogen, Alkyl, Halogenalkyl, Alkoxy oder Alkylthio mit jeweils bis zu 4 Kohlenstoffatomen, Nitro oder Cyano bedeuten.

2. Die Verbindung der Formel

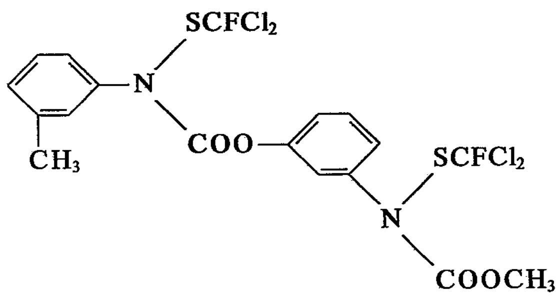

3. Die Verbindung der Formel

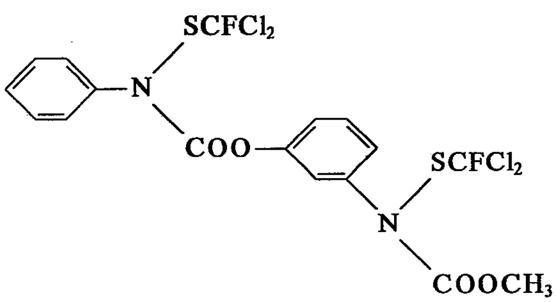

4. Herbizid, enthaltend ein N-sulfenyliertes Diurethan der Formel I gemäß Anspruch 1 als Wirkstoff.

5. Verfahren zur Herstellung von N-sulfenylierten Diurethanen der Formel I gemäß Anspruch 1, dadurch gekennzeichnet, daß man Diurethane der Formel II

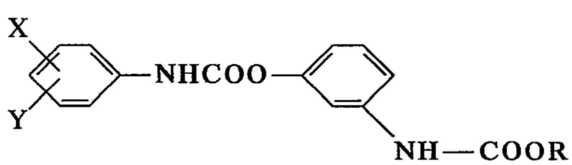

(II)

in der
R, X und Y die im Anspruch 1 angegebenen Bedeutungen haben, mit Dichlorfluorsulfenylchlorid in

Gegenwart der mindestens molaren Menge eines säurebindenden Mittels, bezogen auf Dichlorfluorsulfenylchlorid, in einem Lösungs- oder Verdünnungsmittel umsetzt.

**Patentansprüche für den Vertragsstaat: AT**

1. Herbizid, enthaltend inerte Zusatzstoffe und ein N-sulfenyliertes Diurethan der Formel I

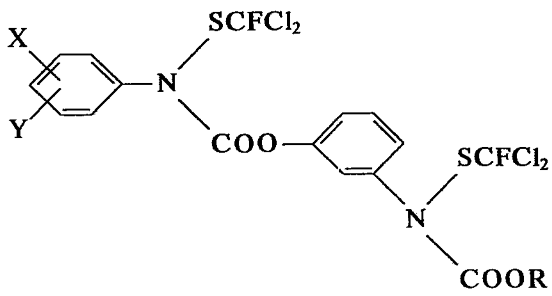

(I)

in der
R gegebenenfalls durch Halogen oder Alkoxy substituiertes Alkyl, Alkenyl oder Alkinyl mit jeweils bis zu 5 Kohlenstoffatomen und
X und Y gleich oder verschieden sind und Wasserstoff, Halogen, Alkyl, Halogenalkyl, Alkoxy oder Alkylthio mit jeweils bis zu 4 Kohlenstoffatomen, Nitro oder Cyano bedeuten,
als Wirkstoff.

2. Herbizid, enthaltend inerte Zusatzstoffe und die Verbindung der Formel

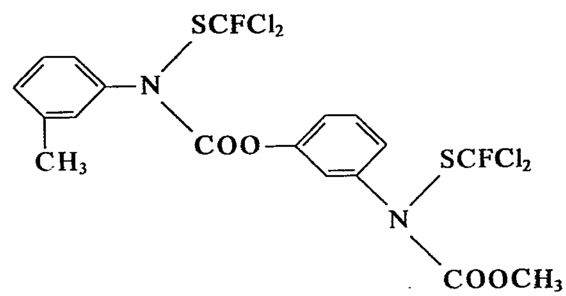

als Wirkstoff.

3. Herbizid, enthaltend inerte Zusatzstoffe und die Verbindung der Formel

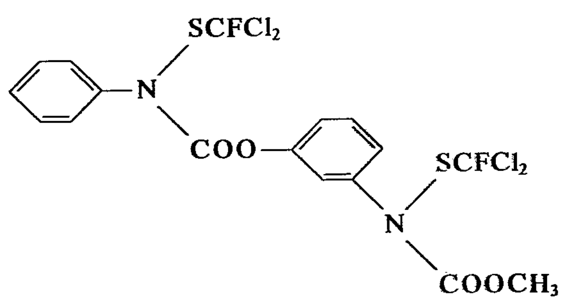

als Wirkstoff.

4. Verfahren zur Herstellung von N-sulfenylierten Diurethanen der Formel I

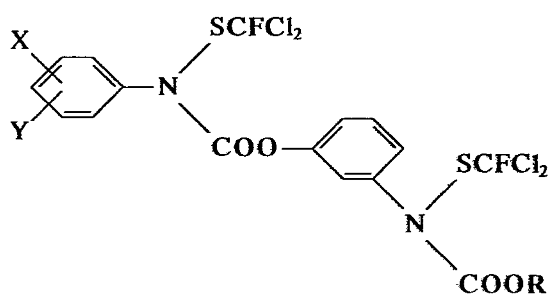

(I)

in der
R gegebenenfalls durch Halogen oder Alkoxy substituiertes Alkyl, Alkenyl oder Alkinyl mit jeweils bis zu 5 Kohlenstoffatomen und
X und Y gleich oder verschieden sind und Wasserstoff, Halogen, Alkyl, Halogenalkyl, Alkoxy oder Alkylthio mit jeweils bis zu 4 Kohlenstoffatomen, Nitro oder Cyano bedeuten, dadurch gekennzeichnet, daß man Diurethane der Formel II

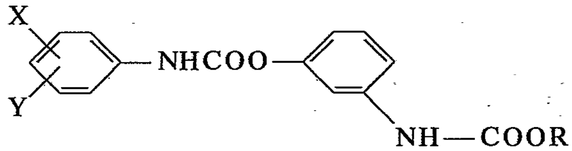

(II)

in der
R, X und Y die oben angegebenen Bedeutungen haben, mit Dichlorfluorsulfenylchlorid in Gegenwart der mindestens molaren Menge eines säurebindenden Mittels, bezogen auf Dichlorsulfenylchlorid, in einem Lösungs- oder Verdünnungsmittel umsetzt.

**Claims for the Contrasting States: BE, CH, DE, FR, GB, IT, LU, NL, SE**

1. N-sulfenylated diurethanes of the formula I

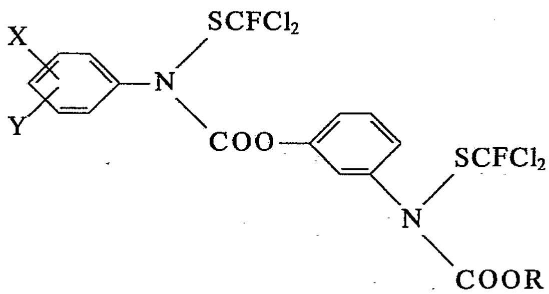

(I)

where R denotes unsubstituted or halogen- or alkoxy-substituted alkyl, alkenyl or alknyl, each of up to 5 carbon atoms, and X and Y are identical or different and each denotes hydrogen, halogen, alkyl, haloalkyl, alkoxy or alkylthio, each of up to 4 carbon atoms, nitro or cyano.

2. The compound of the formula

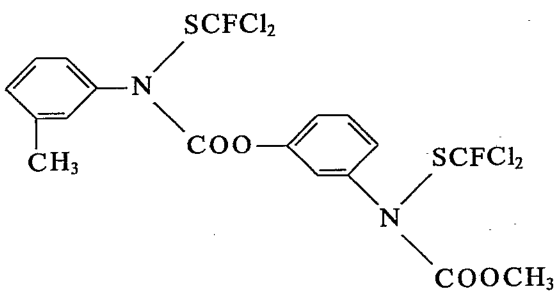

3. The compound of the formula

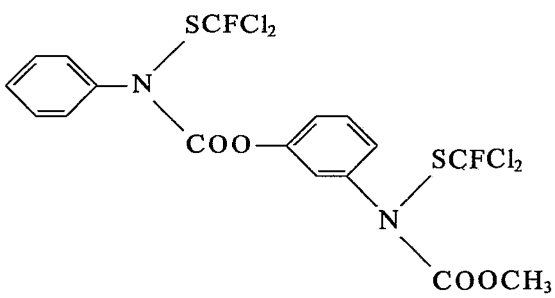

4. A herbicide containing an N-sulfenylated diurethane of the formula I as claimed in claim 1 as active ingredient.

5. A process for the production of N-sulfenylated diurethanes of the formula I as claimed in claim 1, characterized in that diurethanes of the formula II

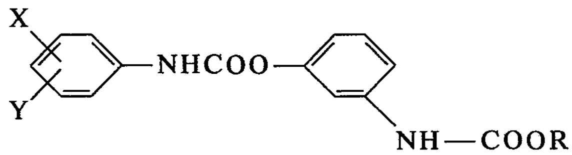

(II)

where R, X and Y have the meanings given in claim 1, are reacted with dichlorofluorosulfenyl chloride in the presence of at least the amount of an acid binder, based on dichlorofluorosulfenyl chloride, in a solvent or diluent.

**Claims for the Contrasting State: AT**

1. A herbicide containing inert additives and an N-sulfenylated diurethane of the formula I

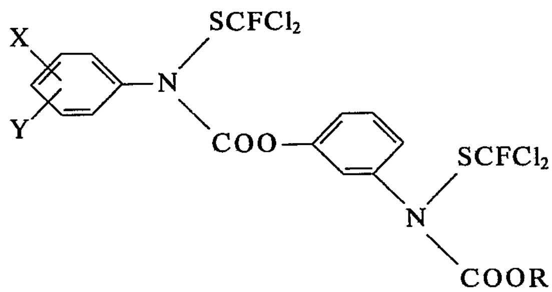

(I)

where R denotes unsubstitued or halogen- or alkoxy-substituted alkyl, alkenyl or alknyl, each of up to 5 carbon atoms, and X and Y are identical or different and each denotes hydrogen, halogen, alkyl, haloalkyl, alkoxy or alkylthio, each of up to 4 carbon atoms, nitro or cyano, as active ingredient.

2. A herbicide containing inert additives and the compound of the formula

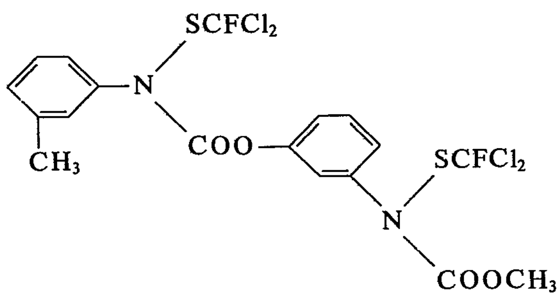

as active ingredient.

3. A herbicide containing inert additives and the compound of the formula

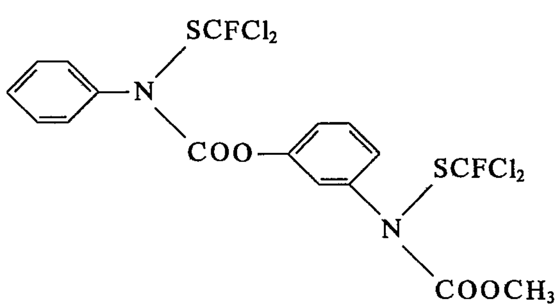

as active ingredient.

4. A process for the production of N-sulfenylated diurethanes of the formula I

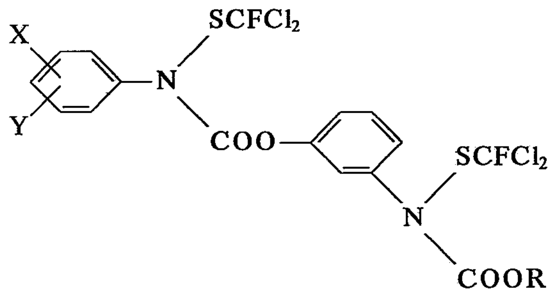

(I)

where R denotes unsubstituted or halogen- or alkoxy-substituted alkyl, alkenyl or alkynyl, each of up to 5 carbon atoms, and X and Y are identical or different and each denotes hydrogen, halogen, alkyl, haloalkyl, alkoxy or alkylthio, each of up to 4 carbon atoms, nitro or cyano, characterized in that diurethanes of the formula II

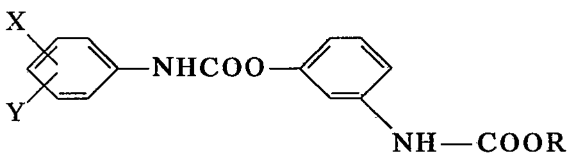

(II)

where R, X and Y have the above meanings, are reacted with dichlorofluorosulfenyl chloride in the presence of at least the molar amount of an acid binder, based on dichlorofluorosulfenyl chloride, in a solvent or diluent.

**Revendications pour les Etats contractants: BE, CH, DE, FK, GB, IT, LU, NL, SE**

1. Diuréthanes N-sulfénylées de formule I

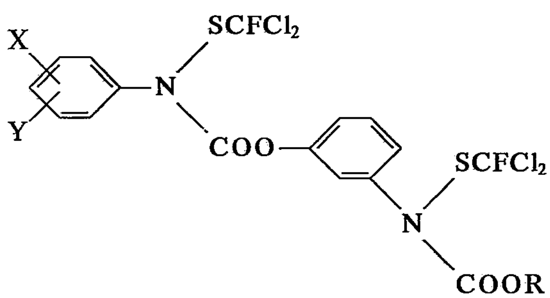

(I)

dans laquelle
R représente un alkyle, alcényle ou alcinyle ayant chacun jusqu'à 5 atomes de carbone, et éventuellement substitués par un halogène ou un alcoxy, et
X et Y sont identiques ou différents et représentent hydrogène, halogène, alkyle, halogènoalkyle, alcoxy ou alkylthio, ayant chacun jusqu'à 4 atomes de carbone, nitro ou cyano.

2. Le composé de formule

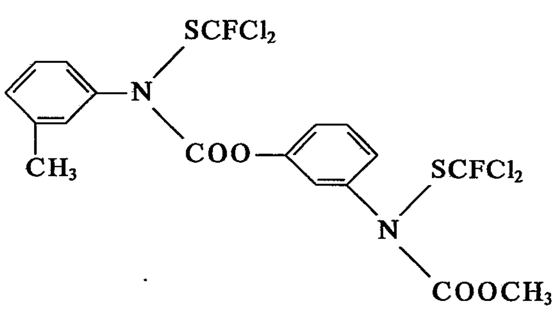

3. Le composé de formule

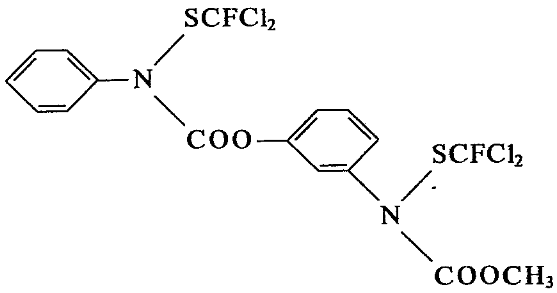

4. Herbicide contenant, comme principe actif, une diuréthane N-sulfénylée de formule I selon la revendication 1.

5. Procédé de préparation de diuréthanes N-sulfénylées de formule I selon la revendication 1, caractérisé par le fait qu'on fait réagir, dans un solvant ou un diluant, des diuréthanes de formule II

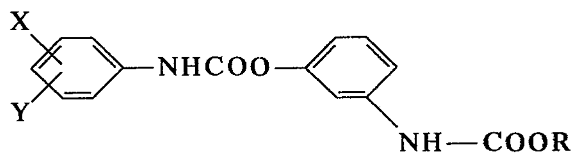

(II)

dans laquelle
R, X et Y ont les significations données à la revendication 1, avec du chlorure de dichlorofluorosulfényle, en présence d'au moins la quantité molaire d'un agent de liaison d'acide, rapportée au chlorure de dichlorofluorosulfényle.

**Revendications pour l'Etat contractant: AT**

1. Herbicide contenant des additifs inertes et, comme principe actif, une diuréthane N-sulfénylée de formule I

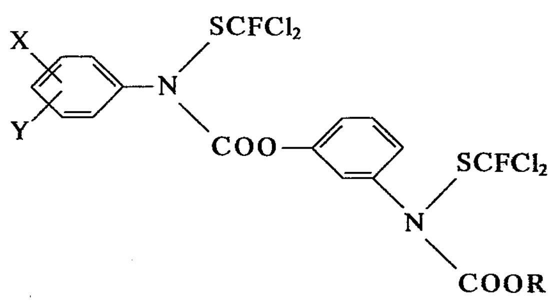

(I)

dans laquelle
R représente un alkyle, alcényle ou alcinyle ayant chacun jusqu'à 5 atomes de carbone, et éventuellement substitués par un halogène ou un alcoxy, et
X et Y sont identiques ou différents et représentent hydrogène, halogène, alkyle, halogènoalkyle, alcoxy ou alkylthio, ayant chacun jusqu'à 4 atomes de carbone, nitro ou cyano.

2. Herbicide contenant des additifs inertes et, comme principe actif, le composé de formule

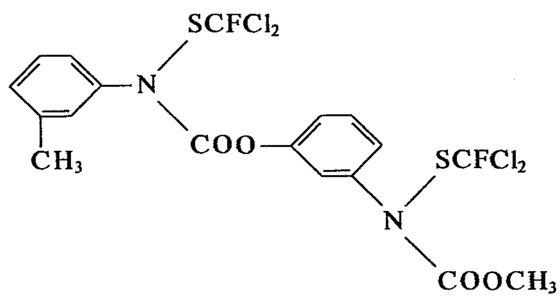

3. Herbicide contenant des additifs inertes et, comme principe actif, le composé de formule

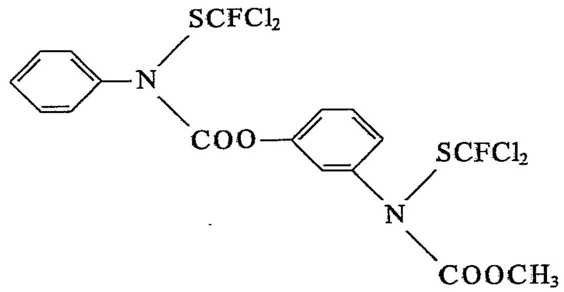

4. Procédé de préparation de diuréthanes N-sulfénylées de formule I selon la revendication 1, caractérisé par le fait qu'on fait réagir, dans un solvant ou un diluant, des diuréthanes de formule II

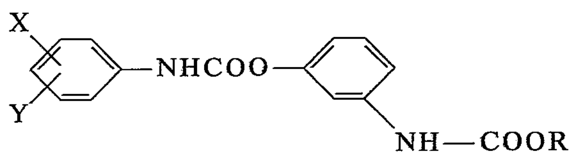

(II)

dans laquelle
R, X et Y ont les significations données à la revendication 1, avec du chlorure de dichlorofluorosulfényle, en présence d'au moins la quantité molaire d'un agent de liaison d'acide, rapportée au chlorure de dichlorofluorosulfényle.